# EUROPEAN PATENT SPECIFICATION

(11) **EP 2 107 415 B1**
(45) Date of publication and mention of the grant of the patent: **18.11.2015**
(21) Application number: 08103345.8
(22) Date of filing: 03.04.2008
(51) Int. Cl.: G02C 5/10, G02C 3/00, G02C 5/22, G02C 1/04

(54) **Eyeglass frame**
Okularrahmen
Monture de lunettes

(43) Date of publication of application: 07.10.2009
(73) Proprietor: Four Nines Inc., 157-0066 Tokyo (JP)
(72) Inventor: Mikame, Tetsuo, Tokyo 157-0066 (JP)
(74) Representative: Ascherl, Andreas

(56) References cited:
- EP-A- 1 103 836
- DE-U1-202004 007 003
- FR-A1- 2 825 159
- GB-A- 1 108 209
- GB-A- 191 029 573
- JP-A- 2001 033 735
- US-A- 6 113 235
- US-A- 6 139 143

## Description

### BACKGROUND OF THE INVENTION

### Field of the Invention

The present invention relates to an eyeglass frame on which temples are attached via elastic bodies on both sides of the rear face of a front frame which holds lenses.

### Description of the Related Art

Generally, in a front frame of eyeglass, there are such types as a full rim type as described in JP, A, 2003-43427, or a half rim type. A pair of temples that contact with side faces of a user's head are provided on both sides of the rear face of the rim that is for installing lenses so as to be rotatable inwardly and foldable from the predetermined expanded condition.

In usual eyeglass frames arranged as described above, users use an eyeglass in such a way that the temples nip the user's head at both sides of ears in a condition where the temples are rotated fully outwardly to come to an end. Further, temple bending curvature is mainly adjusted so that a user can be released from tightness while wearing eyeglasses.

In a conventional eyeglass frame as described above, however, the optimum condition for users is intended to be secured by adjusting mainly the temple bending curvature, which causes such a problem that temple adjustment affects the armor portion attached to the rim since the temple is integrated with the armor.

Moreover, as the adjustment is mainly carried out by the temple adjustment, it is inevitable by all means to bend the temple without deforming the front frame side portion of the temple. Due to this fact the adjustment comes to a result that a part of the inside surface of the temple contacts with a point of the user's head and the contacting force with the head becomes big, which causes a problem of potential risk of pain.

DE 20 2004 007003 U1 discloses a design of a spectacle frame having a rigid main frame and rigid side frames and with the side frames linked to the side frame hinges via spring strips. This enables the user to spread the opening angle of the side frames for a secure grip. The design enables one frame to fit a range of head sizes. The spring elements allow the side frames to be moved in one plane. The hinges are positioned on the inside of the frame with the flat spring elements fitted into slots on the inside of the side frames.

US 6 113 235 A relates to an eyeglasses frame comprising a front having two rims connecting each other with a bridge and two temples foldably fixed to opposite sides of the front. Each of the temples is connected to one or the other side of the front with at least one coiled spring, which can be changed in diameter or twisted so that the associated temple may be opened wider than the normal opening position, and may be changed vertically in posture.

US 6 139 143 A describes a hingeless temple for eyewear, which comprises a unitary length of flexible material such as a shape-memory metal or metal alloy which has a forward section, an elongated section and a flexible pivot section between the forward and elongated sections. The pivot section is characterized by three bends which form a generally serpentine configuration. In the unbiased position, the temple extends in the open position with respect to the eyewear front. Means are provided for selectively and releasably closing the temple in the folded position with respect to the eyewear front. When the closing means are released, the temple automatically pivots to the open position. The front end of the temple may be attached directly to the eyewear front, thereby negating the need for a separate hinge assembly.

GB 1 108 209 A refers to a spectacle frame comprising a front frame and side arms which are each joined to the front frame by a piece of flexible material integral with or fixed to the frame and side arm, each hinge being thinner than the side arms and the front frame. The frame is preferably formed of flexible polypropylene.

US 2006/0114407A1 discloses a shock-absorbing mechanism for spectacles. The shock-absorbing mechanism comprises an endpiece which is disposed from the respective sides of the spectacle front and the temple. The endpiece is composed of an outer elastic wire and an inner elastic wire. The inner elastic wire is bent in a hairpin shape and comprises a first bending portion of a convex shape and a second bending portion of a concave shape.

### SUMMARY OF THE INVENTION

According to the present invention, a temple that is arranged to be foldable inwardly from the predetermined unfolded position is joined via elastic body so that the whole temple is capable to be displaced. Owing to this arrangement, only a small contacting force is applied to the user's head and hence wearing consciousness is reduced. Thus, the present invention provides an eyeglass frame that has no potential risk of pain on the user's head.

According to the present invention, a temple that is arranged to be foldable inwardly from the predetermined unfolded position is connected to one end of an elastic body, while the other end of which is fixed with the front frame so that the whole temple is capable of being displaced. Thereby an end cover connected to the temple contacts with the head of the user via a flat face so that a mall amount of contacting force is applied against the head of the user. Thus, the present invention provides an eyeglass frame that gives less wearing consciousness and has no potential risk of pain on the head.

The present invention has an arrangement according to claim 1.

The front frame is to be made of metal or plastic and the temple is to be made of metal or plastic.

Accordingly, when temples are expanded, not only the temples are deformed but the whole temples can be displaced in the direction of expanding by means of the elastic body. In addition, the front frame made of metal or plastic can be slightly expanded so that inside surface of the end cover provided on the temple comes to contact with the head of a user via a flat face. Thereby, the contacting force on the user's head becomes smaller to reduce wearing consciousness, resulting in eliminating any risk of pain on the user's head while wearing the eyeglass frame.

### BRIEF DESCRIPTION OF THE DRAWINGS

Fig. 1 is a schematic plan view showing a first aspect of an eyeglass frame according to the present invention.
Fig. 2 is a schematic front view of the eyeglass frame shown in Fig. 1.
Fig. 3 is a schematic view of the eyeglass frame shown in Fig. 1, observed from diagonally above.
Fig. 4 is a schematic view showing connection condition of a front frame, an elastic body and a temple of the eyeglass frame shown in Fig 1.
Fig. 5 is a schematic plan view showing a second embodiment of the present invention.
Fig. 6 is a schematic plan view of an eyeglass frame shown in Fig. 5.
Fig. 7 is a schematic view of the eyeglass frame shown in Fig. 5, observed from diagonally above.

### DESCRIPTION OF THE PREFERRED EMBODIMENTS

Hereinafter embodiments of the present invention will be described referring to the drawings.

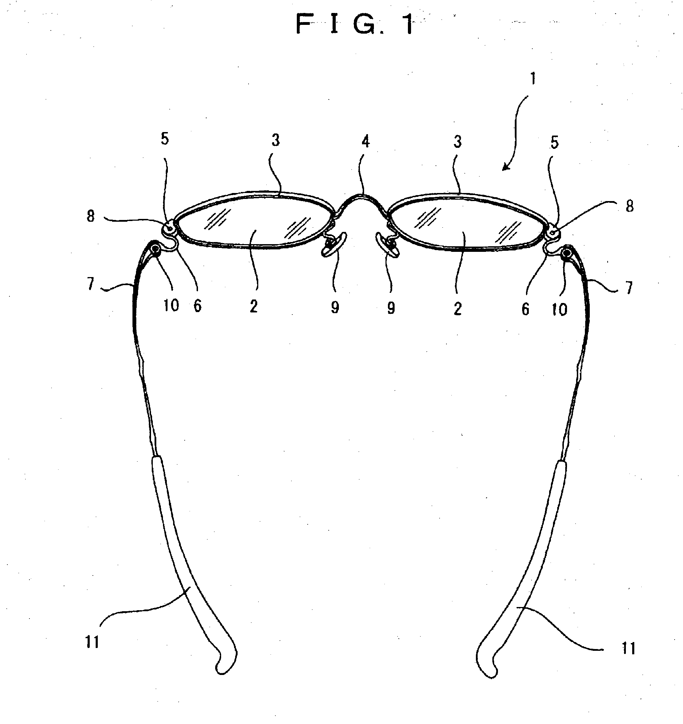

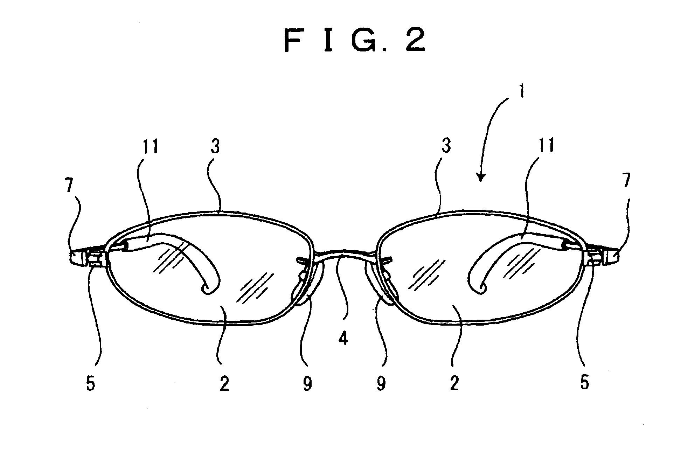

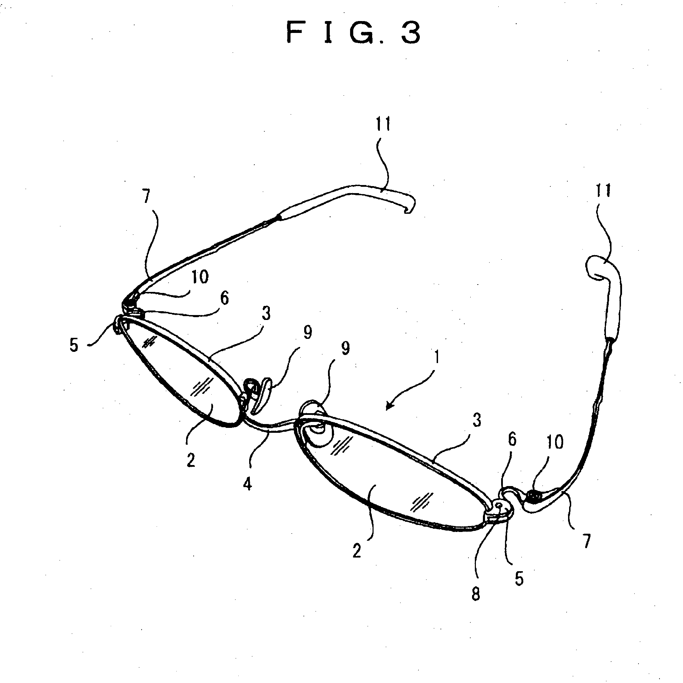

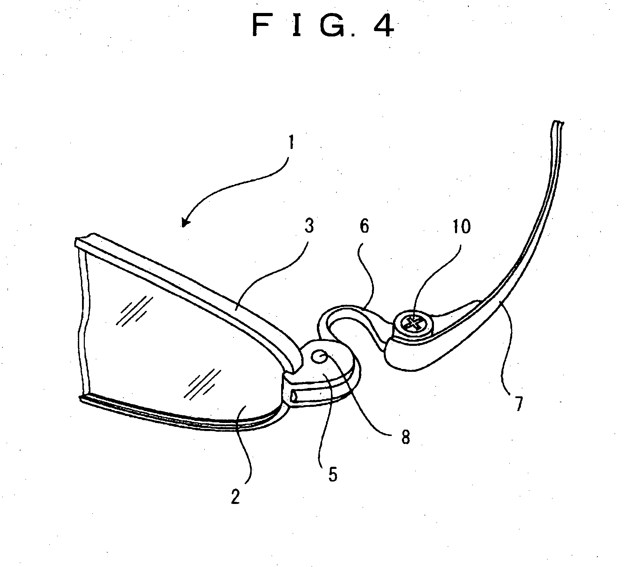

Fig. 1 is a plan view of an eyeglass frame 1 showing the first embodiment of the present invention, Fig. 2 is a schematic front view thereof, and Fig. 3 is a schematic view observed from diagonally above. In addition, Fig. 4 is a schematic view showing a connection condition of a front frame, an elastic body and a temple.

The eyeglass frame 1 is a full rim type eyeglass frame made of metal and a pair of lenses 2, 2, left and right, are fitted thereto, the eyeglass frame 1 including rims 3, 3 forming a front frame which is joined at a bridge portion 4, armor portions 5, 5 disposed at the outer side of the rims 3, 3 which nip and release a perimeter of the lenses 2, 2 when exchanging the lenses 2, 2 or doing the like, elastic bodies 6, 6 connected to the armor portions 5, 5, and the temples 7, 7 which are connected to the elastic bodies 6, 6 and nip the head of users above the ears thereof while pressing the same.

Screws 8, 8 are provided on the armor portions 5, 5 of both sides of the rims 3, 3. The rims 3, 3 can be released in accordance with a screw tightening condition, and the lenses 2, 2 are placed in a released condition and then the screws are tightened, which can fix the lenses 2, 2.

The elastic bodies 6, 6 connected to the armor portions 5, 5 of both sides of the rims 3, 3 are bent inwardly in reversed U-letter form at the middle portion thereof. The temples 7, 7 are attached to the elastic bodies 6, 6 via hinges 10, 10. Accordingly, the temples 7, 7 are foldable and expandable by means of the hinges 10, 10. Here, 9, 9 are nose pads contacted with both sides of the nose of a user, and 11, 11 are end covers provided at the tips of the temples 7, 7.

In the eyeglass frame 1 arranged as described above, firstly the temples 7, 7 are expanded from a folded condition to the position ready to use. In order to start using, the head is inserted between the both temples 7, 7, in other words the user's head span above the both ears is nipped with the both temples 7, 7.

While nipping, in a case where both temples 7, 7 are expanded, not only the temples 7, 7 are expanded around the hinges 10, 10 as fulcrums, but also the elastic bodies 6, 6, which are connected to the hinges 10, 10 and are bent inwardly, come to be deformed.

That is to say, when the span of both temples 7, 7 in an expanded situation is arranged to be smaller than that of the head, elastic deformation of the opposite side of the armor portion 5, 5 side of the elastic bodies 6, 6, as well as outward displacement of the temples 7, 7 around the hinges 10, 10 as fulcrums provided on the elastic bodies 6, 6, causes the temples 7, 7 themselves to contact with the head portion via flat faces.

Consequently, unlike the conventional eyeglass frame wherein a part of temples 7, 7 contacts with the user's head applying considerable force thereon, resulting in remarkable wearing consciousness, the temples 7, 7 concerned contact with the head via flat faces and apply a small force to the head, whereby users do not have remarkable wearing consciousness even for a long period of usage.

Moreover as the temples nip the user's head securely, there is no risk of slipping down or falling out of place at all.

Although the above embodiment illustrates an eyeglass frame of full rim type, it is not limited to that but half rim type may also be accepted. Adoption of the elastic bodies 6, 6 and the temples 7, 7 connected to the elastic bodies 6, 6, which are bent inwardly, via the hinges 10, 10 realizes secured nipping with a small working force against the user's head via flat face contact.

Therefore there is no potential risk of pain at all even when users wear the glasses for a long period of time.

Further, although in the example the elastic bodies 6, 6 and the temples 7, 7 are connected via the hinges 10, 10, alternatively the armor portions 5, 5 and the elastic bodies 6, 6 may be connected via the hinges 10, 10.

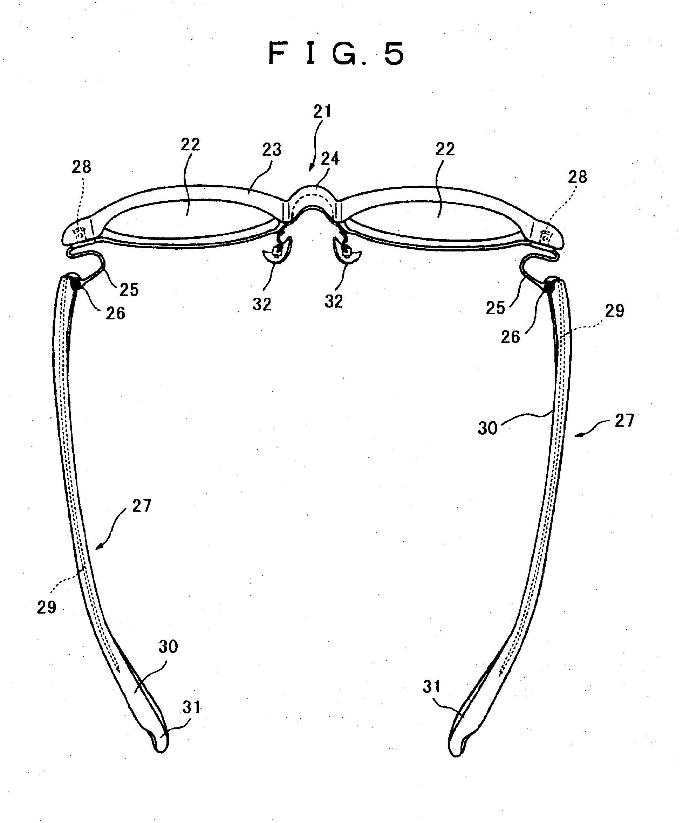

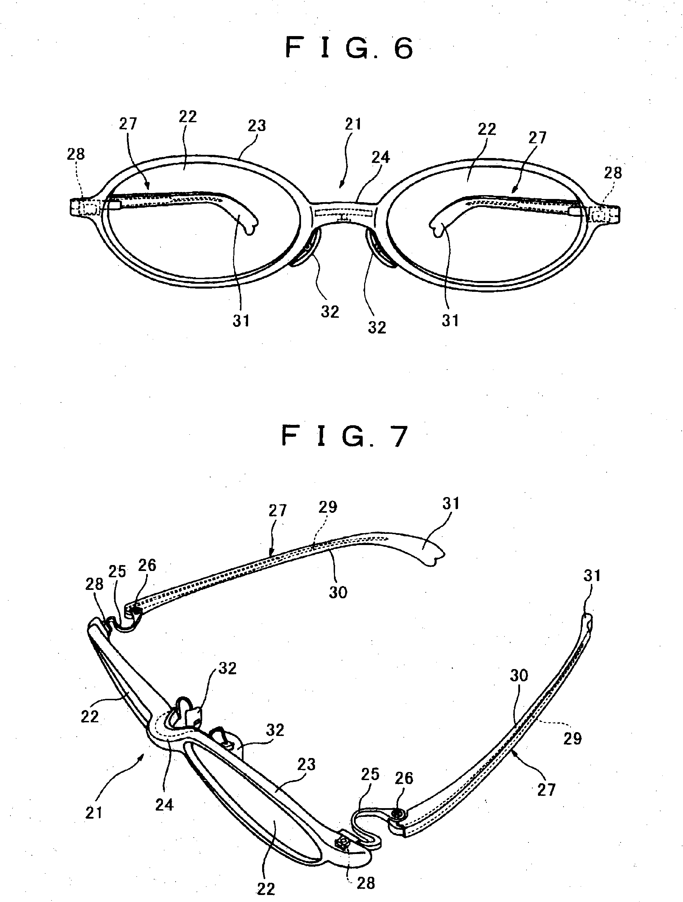

Fig. 5 to Fig. 7 show the second embodiment of eyeglass frame according to the present invention, and Fig. 5 is a schematic plan view of an eyeglass frame 21, Fig. 6 is a schematic front view, and Fig. 7 is a schematic view observed from diagonally above.

This eyeglass frame is made of plastic, being of full rim type, to which a pair of lenses 22, 22, left and right, are fixed, including a front frame 23 provided with a bridge 24 at the central portion, elastic bodies 25, 25 disposed at both outer end sides on the rear face of the front frame 23, and temples 27, 27 provided at the opposite sides to the front frame 23 sides of the elastic bodies 25, 25 via hinges 26, 26 and is arranged to press the user's head above the ears to nip the same position.

The elastic bodies 25, 25 provided on both sides of the front frame 23 are fixed to both outer side ends of the front frame 23 by embedding embedding portions 28, 28 provided at one end of the elastic bodies 25, 25 into the outer side ends of the front frame 23. At the same time, both elastic bodies are bent inwardly in a shape of reversed U-letter, and such forming causes high elasticity performance.

The temples 27, 27 provided at the other ends of both elastic bodies 25, 25 via the hinges 26, 26 are composed of core portions 29, 29 and cover portions 30, 30 covering the core portions 29, 29.

The ends of the elastic bodies 25, 25 and the core portions 29, 29 are connected to the hinges 26, 26. The temples 27, 27 are formed so that the covering portion 30, 30, which are composing members of the temples, are arranged to work as end covers 31, 31 at the opposite end of the elastic bodies 25, 25. Note that 32, 32 are the nose pads that contact with both sides of the user's nose.

Accordingly, the temples 27, 27 are foldable between the position illustrated in the drawing and the folded position inward from the above position by means of hinges 26, 26.

In the eyeglass frame arranged as described above, firstly both temples 27, 27 are expanded from the folded situation to be ready to use by users. Thereafter a user inserts the head between the temples 27, 27 to nip the head across a span above both ears for starting usage.

Expansion of the temples 27, 27 while nipping the head is not only expansion around the hinges as fulcrums but the elastic bodies 25, 25 are deformed as well.

That is, when the span of the temples 27, 27 is initially set to be smaller than that of the head in an expanded situation, the fact that the other end portions of the elastic bodies 25, 25 referring to the embedded portions are expanded and deformed elastically having the embedded portion 28, 28 as fulcrums, and also a slight deformation of the front frame made of plastic occurs causes the temples 27, 27 themselves to contact with the user's head via flat faces.

Consequently, unlike the conventional eyeglass frame wherein a part of temples 27, 27 contacts with the user's head applying considerable force thereon, resulting in remarkable wearing consciousness, the temples 27, 27 concerned contact with the head via flat faces and apply a small force to the head, whereby users do not have remarkable wearing consciousness even for a long period of usage. Moreover as the temples nip the user's head securely, there is no risk of slipping down or falling out of place at all.

Although the first embodiment is described such that the front frame is to be metal and also the temple is to be metal as well, the front frame may be metal and the temple may be made of plastic. Also the second embodiment is described such that the front frame is to be plastic and also the temple is to be plastic as well, but the front frame may be plastic and the temple may be metal.

Further, in the first embodiment the hinge is disposed between the elastic body and the temple but the hinge may be disposed between the elastic body and the armor, and in the second embodiment the hinge is disposed between the elastic body and the temple but the hinge may be disposed between the embedding portion and the elastic body.

Incidentally in the forementioned embodiments, a full rim type eyeglass frame was described, but the present invention is not limited to that and the half rim type may also be accepted. Adoption of an elastic body which is bent inwardly and a temple connected to the elastic body via a hinge causes the contact with the user's head via a flat face and secured nipping with a small level of working force. Hence there is no risk of pain at all even if a user uses the glasses for a long period of usage.

## Claims

1. An eyeglass frame (1) comprising:
rims (3) forming a front frame (3) for holding lenses (2);
a pair of temples (7),each provided at each of both sides of the front frame (3), for nipping a head of a user; and
an elastic body (6) provided between the front frame (3) and each of the temples (7); and
a hinge provided between one end of the elastic body (6) and the respective temple (7) ,
**characterized in that**,
the elastic body (6) is composed of a single element only and is bent inwardly in a U-letter-like shape at a middle portion thereof,
**in that** screws (8) are provided on armor portions (5) which are disposed at both sides of the rims (3), wherein the rims nip and release a perimeter of the lenses (2), and wherein the rims (3) can be released in accordance with a screw tightening condition, whereby the lenses (2) are placed in a released condition and then the screws (8) are tightened to fix the lenses (2),
and **in that** the other end of the elastic body (6) is connected to the respective armor portion (5).

2. The eyeglass frame (1) according to claim 1, wherein said front frame is made of metal.

3. The eyeglass frame (1) according to claim 1, wherein said front frame is made of plastic.

4. The eyeglass frame (1) according to claim 1, wherein said temples (7) are made of metal.

5. The eyeglass frame (1) according to claim 1, wherein said temples (7) are made of plastic.

## Patentansprüche

1. Brillengestell (1), aufweisend:
Ränder (3), die ein vorderes Gestell (3) zum Halten der Gläser (2) ausbilden;
ein Paar Bügel (7), die je einer auf beiden Seiten des vorderen Gestells (3) vorgesehen sind, zum Einklemmen eines Kopfs eines Benutzers; und
einen elastischen Körper (6), der zwischen dem vorderen Gestell (3) und jedem der Bügel (7) vorgesehen ist; und
ein Scharnier (10), das zwischen einem Ende des elastischen Körpers (6) und dem jeweiligen Bügel (7) vorgesehen ist,
**dadurch gekennzeichnet, dass**
der elastische Körper (6) nur aus einem einzigen Element besteht und in dessen mittlerem Teil in einer U-förmigen Form nach innen gebogen ist,
dass Schrauben (8) an Backenteilen (5) vorgesehen sind, die an beiden Seiten der Ränder (3) angeordnet sind, wobei die Ränder einen Umfang der Gläser (2) einklemmen und freigeben und wobei die Ränder (3) gemäß einem Schrauben-Anzugzustand gelöst werden können, wodurch die Gläser (2) in einen gelösten Zustand versetzt werden, und dann die Schrauben (8) angezogen werden, um die Gläser (2) zu fixieren, und dass das andere Ende des elastischen Körpers (6) mit dem entsprechenden Backenteil (5) verbunden ist.

2. Brillengestell (1) gemäß Anspruch 1, wobei das vordere Gestell aus Metall hergestellt ist.

3. Brillengestell (1) gemäß Anspruch 1, wobei das vordere Gestell aus Kunststoff hergestellt ist.

4. Brillengestell (1) gemäß Anspruch 1, wobei die Bügel (7) aus Metall hergestellt sind.

5. Brillengestell (1) gemäß Anspruch 1, wobei die Bügel (7) aus Kunststoff hergestellt sind.

## Revendications

1. Monture de lunettes (1) comprenant :
des bords (3) formant un cadre avant (3) pour maintenir des verres (2) ;
une paire de branches (7), fournies chacune sur chacun des deux côtés du cadre avant (3) pour serrer une tête d'un utilisateur ; et
un corps élastique (6) fourni entre le cadre avant (3) et chacune des branches (7) ; et
une charnière (10) fournie entre une extrémité du corps élastique (6) et la branche respective (7),
**caractérisée en ce que**
le corps élastique (6) est seulement composé d'un élément unique et est plié vers l'intérieur en une forme de lettre U sur une partie médiane de celui-ci,
**en ce que** des vis (8) sont fournies sur des parties d'armature (5) qui sont disposées sur les deux côtés des bords (3), dans lequel les bords serrent et libèrent un périmètre des verres (2) et dans lequel les bords (3) peuvent être libérés selon un état de serrage des vis, moyennant quoi les verres (2) sont placés dans un état libéré et ensuite les vis (8) sont serrées pour fixer les verres (2)
et **en ce que** l'autre extrémité du corps élastique (6) est reliée à la partie d'armature respective (5).

2. Monture de lunettes (1) selon la revendication 1, dans laquelle ledit cadre avant est en métal.

3. Monture de lunettes (1) selon la revendication 1, dans laquelle ledit cadre avant est en plastique.

4. Monture de lunettes (1) selon la revendication 1, dans laquelle lesdites branches (7) sont en métal.

5. Monture de lunettes (1) selon la revendication 1, dans laquelle lesdites branches (7) sont en plastique.
